(19) Europäisches Patentamt
European Patent Office
Office européen des brevets

(11) **EP 3 023 517 A1**

(12) **EUROPEAN PATENT APPLICATION**

(43) Date of publication:
**25.05.2016 Bulletin 2016/21**

(51) Int Cl.:
***C25B 11/04*** [(2006.01)]   ***C25B 1/04*** [(2006.01)]
***C25D 11/34*** [(2006.01)]   ***C25D 5/00*** [(2006.01)]

(21) Application number: **14306849.2**

(22) Date of filing: **20.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
 • **Université Paris Diderot - Paris 7**
   **75013 Paris (FR)**
 • **Université Pierre et Marie Curie (Paris 6)**
   **75005 Paris (FR)**
 • **CENTRE NATIONAL DE LA RECHERCHE SCIENTIFIQUE -CNRS-**
   **75016 Paris (FR)**
 • **Ecole Normale Supérieure**
   **75005 Paris (FR)**

 • **Université Cergy-Pontoise**
   **95000 Cergy (FR)**

(72) Inventors:
 • **Limoges, Benoît**
   **91220 BRETIGNY S/ORGE (FR)**
 • **Lambert, François**
   **28700 HOUVILLE (FR)**
 • **Mavre, François**
   **94270 KREMLIN BICETRE (FR)**
 • **Policar, Clotilde**
   **75014 PARIS (FR)**

(74) Representative: **Regimbeau**
   **20, rue de Chazelles**
   **75847 Paris Cedex 17 (FR)**

(54) **Electrogeneration of a catalytic film for producing H2 through water electrolysis**

(57)     The present invention concerns a process for preparing a film-coated electrode, comprising the steps of collecting a suspension of nanoparticles of a metallic species in an oxidation state of zero on a core material and applying a voltage to oxidize said metallic species in a solution comprising an anionic species.

The present invention is further directed to an electrode obtainable by said process, an electrolytic cell comprising said electrode, and the use of said electrode or said electrolytic cell for producing $H_2$ through water electrolysis.

**Figure 1**

**Description**

**FIELD OF INVENTION**

The present invention relates to the field of clean energies, and is directed to a process for the preparation of an electrode capable of oxidizing water into dioxygen gas, an electrode obtainable by said process and an electrolytic cell comprising an electrode obtainable by said process. The present invention is further directed to the use of said electrode and electrolytic cell for producing $H_2$ through water electrolysis.

**TECHNOLOGICAL BACKGROUND**

As a result of population and economic growth, world energy consumption is predicted to increase at least two-fold by 2050.

In order to anticipate the ineluctable disappearance of fossil fuels such as coal, oil and gas, there is a need to develop alternative and clean sources of energy.

Hydrogen gas ($H_2$) is considered a viable and promising source of clean energy. It is high in energy and its combustion in air only leads to the formation of pure water, making $H_2$ a clean energy source.

Hydrogen is the simplest element and is also the most abundant element in the universe. Despite its simplicity and abundance, $H_2$ occurs seldom as a gas on the Earth.

Currently, most $H_2$ is produced through steam reforming of hydrocarbons from fossil fuels.

One alternative approach for the generation of $H_2$ is water electrolysis, a process that enables the storage of energy in the form of chemical bonds. Water electrolysis or photo-electrolysis, potentially using renewable energies, is however still challenging.

Water electrolysis involves the following two reactions:

$$2\ H_2O\ (liq.) \rightarrow O_2\ (gas) + 4H^+ + 4\ e^-  \qquad (1)$$

$$2\ H^+\ (aq.) + 2\ e^- \rightarrow H_2\ (gas) \qquad (2).$$

Equation (1) involves the oxidation of water into $O_2$, while equation (2) concerns the reduction of protons into $H_2$.

Oxidation of water into $O_2$ is a critical step in water electrolysis. Indeed, to a greater extent than protons reduction, water oxidation at a standard electrode surface requires a relatively high overpotential. The minimum theoretical voltage (thermodynamic potential) required for producing $H_2$ from water is 1.23 V at pH=0, and in practice it is necessary to apply electric potentials of around 2 to 3 V. It is believed to result from the numerous bond breakings and bond formations.

The oxidation of water into $O_2$ eventually leads to a low energetic yield.

To improve this yield, a solution is to take advantage of catalysts for water oxidation, the immobilization of which can be advantageously performed on an electrode surface. The intrinsic criteria that qualify a satisfying catalyst are of course its activity, stability and faradic efficiency, but also the economical aspects that are directly linked to the available resources and production price of the metal used. Catalysts that have been so far identified as the most efficient for water oxidation are all based on noble metals like Ir or Ru [1]. Those are rare and expensive materials that are not suited to large-scale development.

Research effort is thus currently focused on designing new water oxidation catalysts, in particular aiming at reducing the overpotential necessary to perform water oxidation to values of around 1.5 V. Efforts are also made to develop catalysts for oxidation of water that are active under fairly neutral conditions.

Most recently developed catalysts are based on inorganic materials, and more specifically inorganic compounds based on transition metals such as metal oxides, in particular Fe, Ni, Co or Mn oxides.

Methods for producing electrodes suitable for the electrolytic reduction of water into $H_2$ can be classified into two main categories.

It has recently been demonstrated that metal oxide amorphous films generated by anodic electrodeposition of a metallic salt (cobalt, nickel, iron, etc.) dissolved in a buffered medium (phosphate, borate, etc.) can efficiently catalyze water oxidation. In other words, methods of the first category consist in the electrodeposition of a soluble metal ion on an electrode in the presence of an anionic species. For example, Nocera et al [2] developed a method in which soluble $Co^{2+}$ ions in a buffer solution (phosphate or borate) are electrodeposited at the surface of an inert electrode to form a catalytically active film of amorphous metal oxides. The film formation rate, however, is limited by the solubility of $Co^{2+}$ ions in solution.

Alternatively, it is also possible to form amorphous metal oxide films using a photochemical route, or by corrosion of a metallic film deposited by sputtering or electron beam physical vapor deposition on a substrate. In this second category, the method includes the formation of a metallic film (i.e. in a zero oxidation state) followed by its anodic passivation (*i.e.* anodic corrosion) in the presence of an anionic species. Alternatively, the metallic film may also be produced by electroplating or chemical vapor deposition.

The catalytically active films formed with these methods are plain, thin films, having a bidimensional structure.

Electrolytic oxidation of water to produce $O_2$ with these transition metals is however still in its infancy and there is a need to develop improved metal oxide catalysts to perform this reaction more efficiently , i.e. preferably at an overpotential of around 1.5 V and, preferably, under neutral conditions.

The inventors of the present invention have developed a new approach for producing an electrode coated with a catalytically active metal oxide layer, comprising generating a catalytic film on an electrode surface by means of anodic oxidation of metallic nanoparticles in an oxidation state of zero (0).

In particular, it has been unexpectedly discovered that (conductive) metal carbides nanoparticles such as cobalt (0) carbide or nickel (0) carbide nanoparticles can be used in this process, in spite of their known inertness to oxidation.

Interestingly, these particles possess magnetic properties and can therefore be easily collected at an electrode surface by means of a simple magnet, allowing thus to form an electrically conductive particle network that can be then efficiently anodically corroded in a buffered environment to generate the catalytic active film for water oxidation.

The process according to the present invention results in the formation of a thick porous layer (in particular ranging from approximately 0.05 $\mu$m to 50 $\mu$m) of a catalytically active metal oxide film in a very short time.

In addition, the macroscopic morphology of the catalytically active layer of metal oxides is completely different from the films obtained with the prior art methods. Indeed, the active layer obtained through the process of the invention has a porous, tridimensional structure, and a high physical and chemical heterogeneity (some parts being made of nonconductive amorphous metal oxide material and other parts made of non-corroded conductive metal nanoparticles). This morphology results in a fast activation of the film for water oxidation and an increased catalytically active surface (increase of the specific area available for catalysis).

Without wishing to be bound by theory, it is believed that the efficiency in the formation of the catalytic film obtained by the process described herein results from the combined effects of both the high porosity of the conductive three-dimensional particulate network and the resulting high concentration of metallic ions electrochemically generated in the immediate vicinity of the core material.

Another advantage of the method of the invention lies in the possibility of depositing the active layer on any type of material, as long as the material is conductive or semi-conductive.

## SUMMARY OF THE INVENTION

In one aspect, the present invention relates to a process for preparing a film-coated electrode, comprising:

- collecting of a suspension of nanoparticles (NPs) of a metallic species in an oxidation state of zero on a core material, followed by
- electrolytic oxidation into a catalytically active layer of metal oxides in a solution comprising anionic species,

the film of the said film-coated electrode comprising a catalytically active species is preferably amorphous and/or porous.

According to another aspect, the invention is directed to an electrode obtainable by said process.

According to another aspect, the invention is directed to the use of said electrode for producing $H_2$ through electrolysis of water.

According to another aspect, the invention is directed to an electrolytic cell comprising an electrode obtainable by said process.

According to another aspect, the invention relates to the use of said electrolytic cell for producing $H_2$ through electrolysis of water.

## DETAILED DESCRIPTION OF THE INVENTION

In the present application, the terms "catalytically active metal oxide layer", "metal oxides and/or hydroxides" will be used interchangeably and designate the layer or film of oxidized metal obtained by the process described herein, capable of performing the electrolytic oxidation of water into $O_2$. It is observed that the layer or film of oxidized metal obtained by the process described herein is obtained under the form of a layer consisting essentially of metal oxide or metal hydroxides.

The term "overpotential", as used herein, is given its ordinary meaning for the one skilled in the art. It defines the potential that must be applied to a system to carry out the electrochemical reaction minus the thermodynamic potential required for the reaction. In particular, "overpotential ($\eta$)" is understood as a potential difference between the thermodynamic of the standard reduction potential of a given oxidant/reductant couple ($E^\circ_{Ox/Red}$) and the potential at which the reduction of the oxidant (or alternatively the oxidation of the reductant) is experimentally observed ($E$), according to the

following equation: $\eta = E°_{ox/Red} - E$.

In the case of the oxidation of water, the standard potential of the $O_2/H_2O$ couple is pH dependent and is given by the following equation (3):

$$E(pH) = E°(O_2/H_2O) - (RT\ln(10)/F) \times pH \qquad (3)$$

wherein $E$ represents a potential (in Volts (V)),

pH represents the (experimentally determined) pH of the electrolyte solution,

$E°(O_2/H_2O)$ represents the thermodynamic reduction potential of the $O_2/H_2O$ couple (i.e., 1.23 V $vs$ NHE),

$R$ is the universal gas constant ($R = 8.314$ J K$^{-1}$ mol$^{-1}$),

$T$ is the temperature in Kelvin,

$F$ is the Faraday constant, (the number of coulombs per mole of electrons: $F = 9.6485 \times 10^4$ C mol$^{-1}$).

Since the global water splitting reaction is given by

$$2H_2 \leftrightarrow H2H_2 + O_2$$

and the thermodynamic reduction potential of H$^+$ into $H_2$ is expressed by:

$$E(pH) = E°(H^+/H_2) - (RT\ln(10)/F) \times pH \qquad (4)$$

with $E°(H^+/H_2) = 0$ V vs. NHE, a minimal potential difference of $\Delta E = 1.23$ V is needed to dissociate water into $O_2$ and $H_2$.

As used herein, the acronym NHE stands for "Normal Hydrogen Electrode".

As used herein, the acronym SCE stands for "Standard Calomel Electrode".

As used herein, the acronym NP stands for "nanoparticle".

Electrolysis is for instance performed in an electrochemical cell, which typically comprises at least:

- an electrolyte solution comprising the solvent, a supporting electrolyte as a salt, and the substrate;
- a power supply providing the energy necessary to trigger the electrochemical reactions involving the substrate; and
- two electrodes, i.e. electrical conductors providing a physical interface between the electrical circuit and the solution.

As used herein, the "faradic yield of an electrochemical cell" aimed at producing for instance $O_2$ (or $H_2$) gas through electrochemical oxidation of water ($H_2O$) (or reduction of protons) is the ratio of the amount of electrons (in Coulomb) used to produce $O_2$ (or $H_2$) gas relative to the amount of electrons (in Coulomb) furnished to the electrochemical system by the external electric source. The faradic yield is expressed in %.

As used herein, « porosity » is understood as the "open porosity". It is expressed as a percentage of void volume relative to the total particulate film volume, and it could be determined using standard methods such as ellipsoporosimetry or tomography

## Process for obtaining an electrode

In a first aspect, the invention concerns a process for preparing a film-coated electrode, preferably an amorphous film, comprising the steps of:

(a) collecting a suspension of nanoparticles of a metallic species in an oxidation state of zero on a core material, and
(b) applying a voltage to oxidize said metallic species in a solution comprising an anionic species,

the film of the said film-coated electrode comprising a catalytically active species and is preferably amorphous and/or porous.

### Nanoparticles of a metallic species in an oxidation state of zero

The metallic species in an oxidation state of zero is preferably selected from the group consisting of cobalt, nickel, iron, copper, manganese, and mixtures thereof. Advantageously, the metallic species in an oxidation state of zero is selected from the group consisting of cobalt and nickel, and is more advantageously cobalt.

The metallic species in an oxidation state of zero may consist of the pure metal, of an an alloy, of a carbide, or mixtures thereof. For example, in the case of cobalt, the metallic species in an oxidation state of zero may be pure cobalt, a tungsten carbide/cobalt alloy (WC/Co), or cobalt carbide. The "mixture of metallic species in an oxidation state of zero" may be an alloy comprising two or more metallic species in an oxidation state of zero. It may also comprise two or more physically separated metallic species in an oxidation state of zero.

Advantageously, the metallic species in an oxidation state of zero is a metal carbide. In a particularly advantageous embodiment of the invention, the metallic species is cobalt carbide.

The nanoparticles of metallic species as defined above are optionally coated with an organic layer such as grafted aromatic diazonium salt derivatives.

The nanoparticles of metallic species in an oxidation state of zero may also be a mixture comprising a first population of nanoparticles of one metallic species in an oxidation state of zero as defined above and a second (different) population of nanoparticles of another metallic species in an oxidation state of zero as defined above. For example, the mixture may comprise nickel carbide nanoparticles and cobalt carbide nanoparticles.

In a particular embodiment, the nanoparticles of metallic species in an oxidation state of zero is a mixture comprising nanoparticles of cobalt in an oxidation state of zero.

The average size of the nanoparticles of the metallic species in an oxidation state of zero as defined above is preferably of between 2 and 2000 nm, more preferably of between 10 and 1000 nm, even more preferably of between 20 and 800 nm (20 and 800 included), as measured in particular using the TEM methods.

For instance, nanoparticles used in the present invention are commercially available from American Elements®. Their avergae size is variable and essentially depends of the manufacturer's specification. For the sake of illustration and without limitation, nickel nanoparticles are commercially available in average sizes of 20 nm or 800 nm, iron nanoparticles in average sizes of 25 nm or 800 nm and cobalt carbide in average size of less than 50 nm.

*Core material*

According to the present invention, a "core material" is intended to define the material at the surface of which the film of catalytically active species is formed, thus yielding the electrode.

The core material is preferably conductive or semi-conductive. A non-limiting list of conductive and semi-conductive materials comprises indium tin oxide (ITO); fluorine tin oxide (FTO); antimony-doped tin oxide (ATO); aluminum-doped zinc oxide (AZO); glassy carbon; graphite; carbon composites such as screen-printed carbon inks or conductive polymers loaded with carbon particles; carbon mesh; metals, such as gold, copper, silver, platinum, ruthenium, rhodium, osmium, iridium, nickel, cadmium, tin, lithium, chromium, calcium, titanium, aluminum, cobalt, zinc, vanadium, nickel, palladium, copper, and combinations thereof; metal alloys; lithium-containing compounds; metal oxides such as platinum oxide, nickel oxide, zinc oxide, tin oxide, vanadium oxide, zinc-tin oxide, indium oxide, indium-zinc oxide; graphite; organic conductive polymers, such as polyaniline, polythiophene, polypyrrole; laminates and combinations thereof.

Advantageously, the conductive and semi-conductive core material is selected from the group consisting of indium tin oxide (ITO); fluorine tin oxide (FTO) and glassy carbon.

In one particular embodiment, the core material is indium tin oxide (ITO).

The core material may be of any conventional size and shape known to those skilled in the art for preparing an electrode. It may for example be a plate, a sheet or a cylinder.

*Suspension of nanoparticles*

The nanoparticles may be suspended prior to step (a) of the process described above in any solvent able to homogeneously disperse said nanoparticles.

Advantageously, the nanoparticles are suspended in a solvent selected from the group consisting of water, alcohols, such as methanol and ethanol, and mixtures thereof. Preferably, the solvent is water.

The solvent may optionally comprise one or more surfactant. Advantageously, the surfactant is a non-ionic surfactant, such as polysorbate surfactants, for example polysorbate 20 (Tween® 20).

The suspended nanoparticles of said metallic species may optionally be dispersed after they have been suspended in the solvent, advantageously prior to step (a).

As used herein, "dispersing" is understood in the present invention as breaking the agglomerates of nanoparticles so as to obtain a homogeneous distribution of said nanoparticles in the solvent. The dispersion may be effected by means well known to those skilled in the art, such as sonication or stirring. Advantageously, sonication is used for the dispersion step. The one of skill in the art will choose the sonication conditions so as to obtain homogeneously dispersed particles, however avoiding any degradation of said particles. When sonication is used for the dispersion step, it is preferably performed over a period of 10 seconds to 30 min, advantageously of 1 to 10 minutes, preferably of about 5 minutes.

When the nanoparticles have been suspended, and optionally dispersed, the core material is then immersed in the suspension of nanoparticles.

In a particular embodiment, the process of the invention further comprises, prior to step (a), the following steps:

(a1) suspending nanoparticles of a metallic species in an oxidation state of zero in a solvent, and optionally dispersing the suspended nanoparticles of the metallic species,
(a2) immersing a core material in the suspension obtained in step (a1),
(a3) adding an anionic species to the suspension obtained in step (a2).

The order of steps (a2) and (a3) may also be inverted, *i.e.* the anionic suspension may be added prior to immersing the core material in the suspension.

Therefore, in a particular embodiment, the process of the present invention comprises the following successive steps:

(a1) suspending nanoparticles of a metal carbide in an oxidation state of zero in a solvent, and optionally dispersing the suspended nanoparticles of the metallic species,
(a2) immersing a core material in the suspension obtained in step (a1),
(a3) adding an anionic species to the suspension obtained in step (a2),

(a) collecting the suspension of nanoparticles of said metallic species in an oxidation state of zero on the core material,
(b) applying a voltage to oxidize said metallic species.

The order of steps (a2) and (a3) may also be inverted, *i.e.* the anionic suspension may be added prior to immersing the core material in the suspension.

Preferably, in this embodiment wherein the process comprises steps (a1), (a2), (a3), (a) and (b), the metal carbide is cobalt carbide, the nanoparticles are suspended in water and dispersed by sonication, advantageously for about 5 minutes, the core material is selected from the group consisting in indium tin oxide (ITO); fluorine tin oxide (FTO) or glassy carbon, and is preferably indium tin oxide (ITO), the anionic species is a phosphate, advantageously $K_2HPO_4$ and the suspension of nanoparticles of cobalt carbide is collected on the core material by magnetization.

Advantageously, in embodiments wherein the process of the invention comprises steps (a1), (a2) and (a3), said process further comprises a step of dispersing the suspended nanoparticles of the metallic species after step (a1) and before step (a2), advantageously by sonication or stirring, preferably by sonication.

*Collection of the nanoparticles on the core material*

The collection of the nanoparticles of the metallic species in an oxidation state of zero on the core material may be achieved by any means known to those skilled in the art. Advantageously, the suspended nanoparticles are collected on the core material by magnetization, by solvent evaporation or by sedimentation.

Collection by magnetization comprises placing a magnet at a distance sufficient for the core material to attract the suspended nanoparticles on the core material. As will be apparent for the person skilled in the art, this embodiment of the invention requires that the nanoparticles exhibit magnetic properties.

In one embodiment, the suspended nanoparticles are collected on the core material by sedimentation or solvent evaporation. In this embodiment, the nanoparticles do not need to be magnetic. The collection by sedimentation or solvent evaporation may for example be achieved by concentrating a suspension of nanoparticles at the surface of a core material. In that instance, the solvent is advantageously a solvent having a sufficiently low boiling point (e.g. less than 100 °C, advantageously less than 60 °C). The solvent may also be evaporated under the action of heat and/or vacuum.

The amount of suspended nanoparticles determines to a large extent the thickness of the catalytically active layer on the core material. It can be readily adjusted by those skilled in the art, depending on the desired thickness and the surface of the core material on which the nanoparticles are collected.

Advantageously, the amount of collected nanoparticles of the metallic species in an oxidation state of zero relative to the surface of the core material is comprised between 0.01 mg.cm$^{-2}$ and 10 mg.cm$^{2}$, advantageously between 0.05 mg.cm$^{-2}$ and 5 mg.cm$^{-2}$.

Advantageously, the amount of nanoparticles is chosen so as to obtain a layer having a thickness comprised between 0.05 and 50 $\mu$m, advantageously between 0.5 and 15 $\mu$m.

*Anionic species*

Non-limiting examples of anionic species useful in the present invention comprise organic and inorganic anionic species, preferentially anionic coordinating species. Inorganic anionic species are preferably phosphates, borates, carbonates, arsenates, silicates, sulfates, and nitrates. Organic anionic species are preferably anionic organophosphate and phosphonate derivatives (for instance $RPO_3^{2-}$, with R representing a $C_1$-$C_4$ alkyl chain), and carboxylates.

Advantageously, the anionic species is selected from the group consisting of phosphate and borate.

In the solution, the anionic species is associated with a cationic species or counter ion. Non-limiting examples of cationic species include $K^+$, $Na^+$, $Li^+$, $Mg^{2+}$, $Ca^{2+}$, $Sr^{2+}$ and $NR_4^+$ ions (ammonium ions, with R representing H or a $C_1$-$C_4$ alkyl chain), such as tetrabutylammonium $N(C_4H_9)_4^+$ and ammonium $NH_4^+$. Preferably, the cationic species is $K^+$, $Na^+$, $Li^+$, $Mg^{2+}$, $Ca^{2+}$ or $Sr^{2+}$.

Advantageously, the anionic species is obtained from salts selected from the group consisting of $Na_2HPO_4$ $K_2HPO_4$ $Na_2HBO_3$ and $K_2HBO_3$. In a preferred embodiment, the anionic species is obtained from the salt $K_2HPO_4$.

*Oxidation*

After the suspended nanoparticles of the metallic species in an oxidation state of zero have been collected on the core material, a potential is applied to oxidize said metallic species in a solution comprising an anionic species.

The oxidation of the collected metallic species is conducted in a buffer aqueous solution at a pH comprised between 5 and 9, advantageously 6.5 and 7.5, and more advantageously at a pH of around 7.

Advantageously, the concentration of the aqueous buffer solution is comprised between 0.01 M and 1 M, advantageously between 0.1 M and 0.3 M, both values included.

As is well known by those skilled in the art, the potential applied for oxidizing the collected nanoparticles is dependent of the metallic species. In the case of cobalt(0), an anodic potential higher than -0.4 V vs. NHE is required (for instance between -0.3 and 1.5 V vs NHE), while for nickel(0) a potential higher than -0.3 V vs NHE is enough (for instance between -0.2 and 1.5 V vs NHE).

The potential may be applied using two electrodes capable of affording a potential sufficient to oxidize the collected metallic species. In particular, the potential is of between 0 and 2 V vs NHE, preferably between 0.25 V and 1.75 V vs NHE, even more preferably between 0.5 V and 1.5 V vs NHE.

Electrodes suitable for oxidizing the collected metallic species and forming the catalytically active layer can be readily selected by the person skilled in the art. For example, when the metallic species is cobalt carbide, a saturated calomel reference electrode (SCE) and a counter-electrode of platinum may be used. The applied potential may be of around 1 V vs. SCE.

The potential is applied for periods of time ranging from some seconds to several hours, depending on the amount of collected metallic species on the core material and the thickness of the catalytically active layer sought.

Methods for oxidizing (corroding) a metal in an oxidation state of zero are known in the art and include for example potentiostatic and galvanostatic methods. The oxidation may also be performed by cyclic or linear scanning of the potentials with a predetermined rate of scanning and a predetermined number of cycles.

Without wishing to be bound by theory, it is thought that during the application of the anodic potential, the collected nanoparticles at the surface of the core material are progressively oxidized, liberating metal ions which then precipitate in the presence of the anionic species at the surface of the core material and within the porosity of the particulate film, to form a porous, tridimensional catalytically active layer of metal oxide and/or hydroxide.

After the formation of the catalytically active layer, the electrode is optionally rinsed with a solvent, advantageously with water.

**Electrode obtainable by the process of the invention and use thereof**

According to another aspect, the invention is directed to a film-coated electrode obtainable by the process described previously.

Without wishing to be bound by theory, it is anticipated that the chemical composition of the catalytically active film contains essentially the same components as the one of the film obtained by the method described in [2]. Therefore, the film of the film-coated electrodes of the invention comprises, or preferably consists essentially of metal oxides and/or hydroxides. Said metal oxide and/or hydroxide film has an amorphous structure.

It is apparent to those of skill in the art that the film-coated electrodes of the invention, and in particular their catalytically active film cannot be characterized by their chemical composition or crystallographic characteristics only. Said films may indeed differ significantly in their macroscopic morphology, depending in particular on their process of preparation.

For instance, the method described in [2] results in the formation of a plain, nonporous and non-conductive film.

In contrast, the method according to the present invention provides an irregular, macroscopically porous and tridimensional layer. Without wishing to be bound by theory, it is believed to result from the formation of a superposition of nanoparticles during the collection step (b) of the process described previously.

This difference in morphology can, for example, be observed by transmission electron microscopy (TEM) or scanning electron microscopy (SEM) (see examples and figures).

It is observed that the film of the film-coated electrode of the invention comprises or preferably consists of an underlying homogeneous layer covering the core material, and a thicker upper layer of nanoparticles entrapped in an amorphous matrix. The first underlying layer is probably the catalytic film directly generated from the oxidized metallic species released close to the electrode surface, while the upper layer corresponds to an amorphous material in the porosity of the collected particles network. It is believed that the nanoparticles are entrapped in an amorphous film of metal oxides and/or hydroxides, which deposits over them.

The film of the film-coated electrodes of the present invention thus comprises or consists essentially of a three dimensional assembling of a highly porous network of partially-corroded conductive nanoparticles, the porosity of which is filled by an amorphous deposit of a catalytically active metal oxide, itself stabilized by coordinating anionic species, such as phosphates, borates, carbonates, arsenates, silicates, sulfates, and nitrates, organophosphate, phosphonate derivatives ($RPO_3^{2-}$, with R representing a $C_1$-$C_4$ alkyl chain), and carboxylates.

When cobalt carbide is used as the nanoparticle of metallic species, and the anionic species is phosphate, both layers are composed mainly of Co, O and P, with a relative higher content in Co in the upper layer.

The film of the film-coated electrodes of the present invention has a thickness of between 0.5 $\mu$m and 25 $\mu$m, preferably 1 $\mu$m and 20 $\mu$m, for example between 2 and 15 $\mu$m. Of course, the higher the initial quantity of particles, the thicker the film is.

The film-coated electrode obtainable by the process described above is capable of catalyzing the electrolytic oxidation of water into $O_2$, thus allowing water electrolysis and production of $H_2$.

The present invention is therefore also directed to the use of a film-coated electrode obtainable by the process described above for the electrolytic oxidation of water into $O_2$. The present invention is therefore also directed to the use of a film-coated electrode obtainable by the process described above for producing $H_2$ through electrolysis of water.

Advantageously, the current density of water oxidation using the film-coated electrode of the invention is between 1 to 30 mA/cm$^2$ for an applied overpotential ranging from 200 mV to 800 mV.

**Electrolytic cell comprising the electrode of the invention and use thereof**

According to another aspect, the present invention concerns an electrolytic cell comprising an electrode obtainable by the process described above.

The electrolytic cell according to the present invention comprises:

- an electrolyte (a substance able to carry the ions (cations/anions) from one electrode to the other),
- an electric current supply providing the necessary energy to create or discharge the ions in the electrolyte, and
- two electrodes, one of said electrodes being an electrode obtainable by the process described above.

The construction of such electrolytic cells and the conditions for using said electrolytic cell are well known to those skilled in the art.

The electrolyte can be either a neutral, acidic or basic solution with a pH value advantageously ranging from 1 to 14. The pH of the electrolyte is preferably in the range of 8 to 14.

The electrolyte solution advantageously comprises an organic or inorganic salt, preferentially a salt containing an anionic coordinating species. Inorganic anionic species are preferably phosphates, borates, carbonates, arsenates, silicates, sulfates, and nitrates. Organic anionic species are preferably anionic organophosphate, organophosphonate and carboxylates derivatives.

Advantageously, the concentration of the electrolyte species is comprised between 0.01 M and 1 M.

The power source may comprise one or more of power supplies (e.g., batteries and a photovoltaic cell). The voltage applied may be AC (alternative current) or DC (direct current).

Advantageously, the cathode is a carbon, mercury, or platinum electrode. Preferably, it is a platinum electrode, such as a platinum wire, mesh or disk, especially in the context of an electrolytic cell for $H_2$ production at a low overpotential. Alternatively, any cathodic electrode providing a low overpotential for the reduction of protons into dihydrogen is preferably used.

In a preferred embodiment, the electrode obtainable by the process described above is used as the anode in the electrolytic cell, and is capable of producing $O_2$ from water (while $H_2$ is being produced at the cathode).

In a particular embodiment, the electrochemical cell further comprises a third electrode, preferably a reference electrode such as a standard calomel electrode or a silver chloride electrode.

In one embodiment the electrochemical cell comprises one compartment.

In another embodiment the electrochemical cell comprises several compartments, preferably two compartments. In particular, one compartment contains the anode, and this compartment is bridge separated from the cathodic compartment by a glass frit. In this embodiment, the anodic and cathodic compartments may contain two different electrolytes or the same electrolytes.

The present invention also concerns the use of an electrolytic cell comprising an electrode obtainable by the process described above for producing $H_2$ through water electrolysis.

Advantageously, the potential difference applied between the cathode and the anode is between 1.25 V and 2 V. Preferably, the method of the invention is carried out at a temperature between 5 and 90 °C, more preferably between 10 and 45 °C.

In an advantageous embodiment, the faradic yield of $O_2$ in the use of the invention is preferably comprised between 80% and 99%, in particular between 84% and 99%, or more preferably between 90 and 99%.

## DESCRIPTION OF THE DRAWINGS

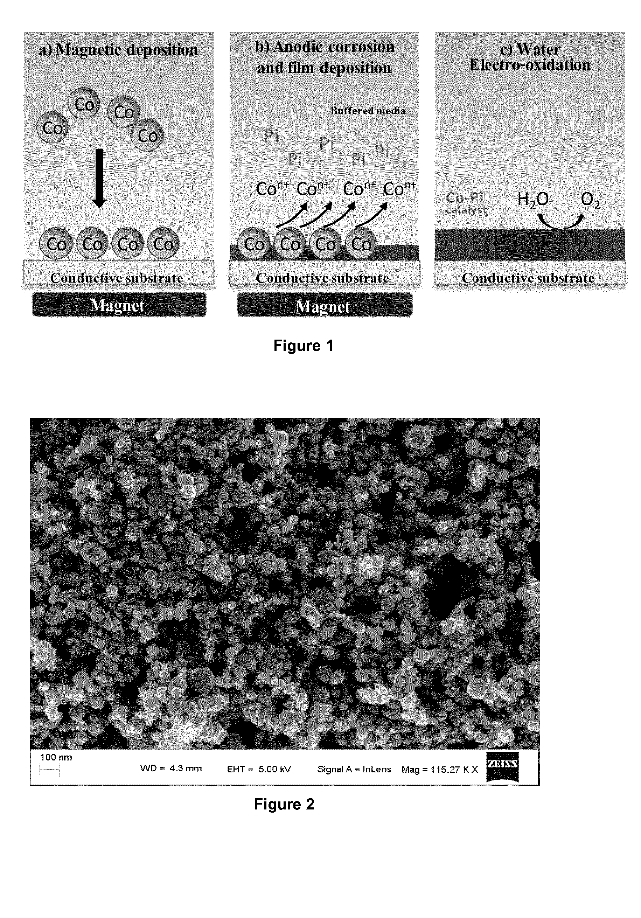

FIGURE 1 is a scheme representing the principles of one embodiment of the method of preparing a film coated electrode according to the invention, using Co/C nanoparticles. The acronyme Pi stands for Phosphate.

FIGURE 2. SEM (scanning electron microscope) image of carbon coated magnetic cobalt carbide particles purchased from Sigma-Aldrich (ref 697745), as a powder with a avergae particle size of less than 50 nm, with a purity of more than 99%.

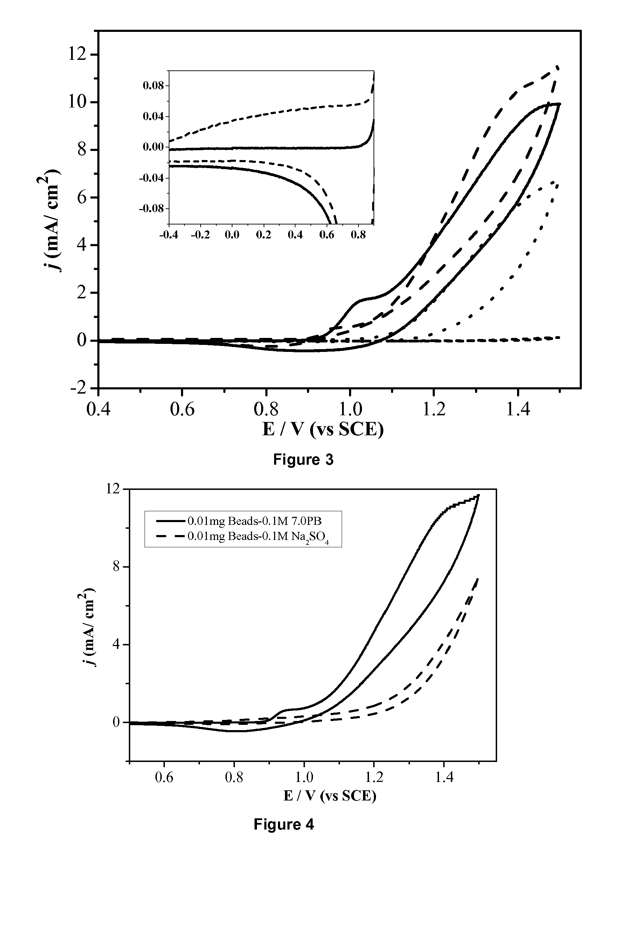

FIGURE 3. Cyclic voltammograms (CV) ($v$ = 0.1 V/s) recorded in a 0.1 M phosphate buffer solution (pH = 7, total volume 40 $\mu$L) for three different electrodes : naked ITO (short dashed line), ITO electrode modified by 0.05 mg/cm$^2$ C/Co-NPs under magnetic field ( dashed line). After this cyclic voltammogram, the same electrode was rinsed and scanned again in 0.1 M phosphate buffer solution (pH = 7) (solid line), ITO electrode modified by a film electrogenerated by a single scan in a cobalt nitrate solution 0.5 mM $Co(NO_3)_2$ in 0.1 M phosphate buffer solution (pH = 7) (dotted line). Insert: zoom of the dashed and solid curve at low potentials range.

FIGURE 4. Cyclic voltammograms ($v$ = 0.1 V/s) recorded at an ITO electrode modified by 0.05 mg/cm$^2$ C/Co-NPs: (solid line) in a 0.1M phosphate buffer solution (pH = 7) or (dashed line) in a 0.1 M $Na_2SO_4$ solution.

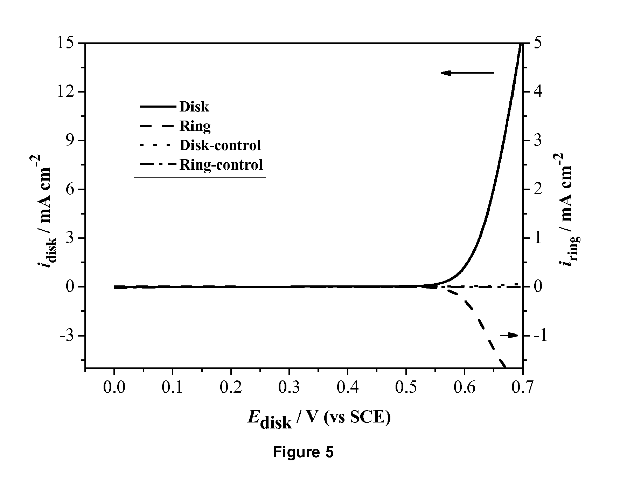

FIGURE 5. Linear voltammogramms ($v$ = 0.1 V/s) carried out in 20 mL 1 M NaOH solution at a RRDE (Rotating Ring Disk Electrode) whose disk electrode have been modified by film electrodeposited from the anodic corrosion of C/Co-NPs during 10 mn at 1 V vs. SCE in a phosphate buffer 0.1 M. Rotating rate: 1600 rpm. Solid line: current recorded at the disk. Dashed line: simultaneous current recorded at the platinum ring for a constant applied potential of -0.7 V vs. SCE. Dotted and short dashed line : current recorded at a naked disk and ring.

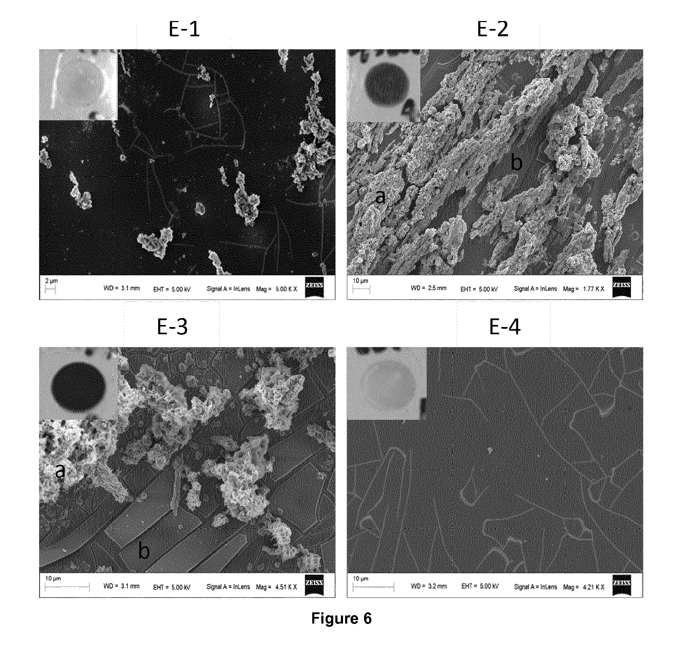

FIGURE 6. SEM (scanning electron microscope) images of ITO electrodes modified with different quantities of C/Co-NPs. The film is obtained after application of a constant anodic potential of 1.0 V vs. SCE during 1 h (in 5 mL phosphate buffer 0.1 M, pH 7.0). Mass of initially deposited C/Co-NPs: (E-1) 0.05 mg/cm$^2$, (E-2) 0.5 mg/cm$^2$ et (E-3) 5 mg/cm$^2$. (E-4) ITO electrode prepared from 1 hr electrodeposition at 1 V (vs. SCE) in a 0.1 M 5 mL phosphate buffer solution (pH 7) containing 0.5 mM $Co(NO_3)_2$. Insert: Pictures of ITO electrodes after modification.

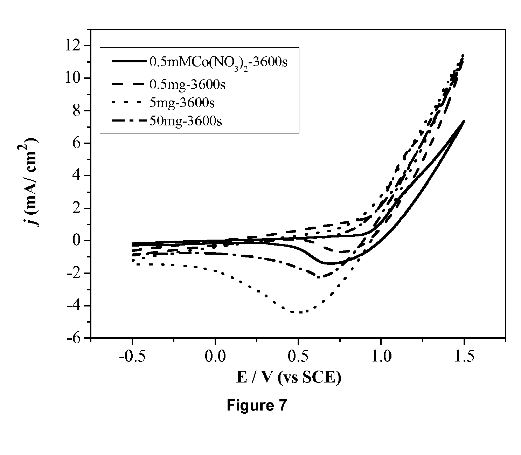

FIGURE 7. Cyclic voltammograms ($v$ = 0.1 V/s) recorded in a 0.1M phosphate buffer solution (pH = 7, total volume 5 mL). The film is obtained after application of a constant anodic potential of 1.0 V vs. SCE during 1 h (in 5 mL PB 0.1 M, pH 7.0). Mass of initially deposited C/Co-NPs : (E-1) 0.05 mg/cm$^2$ (dashed line), (E-2) 0.5 mg/cm$^2$ (dotted line) et (E-3) 5mg /cm$^2$ (dotted and dashed line). (E-4) ITO electrode prepared from 1 hr electrodeposition at 1 V (vs. SCE) in a 0.1 M 5 mL phosphate buffer solution (pH 7) containing 0.5 mM $Co(NO_3)_2$ (solid line).

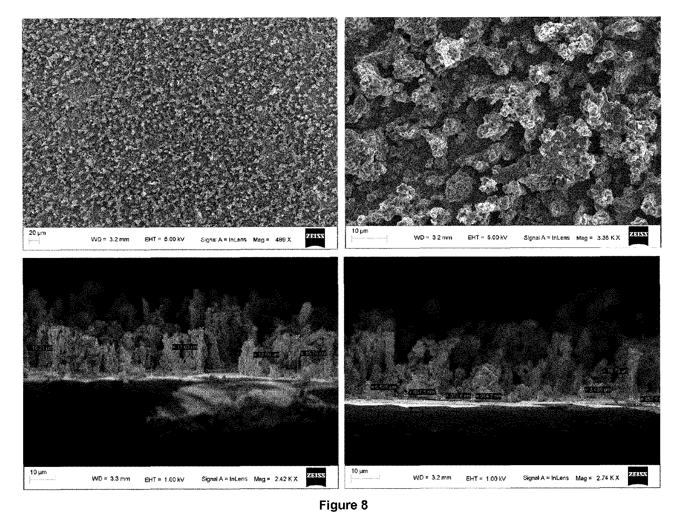

FIGURE 8. SEM picture of ITO electrode E-3 modified as described in table 1.

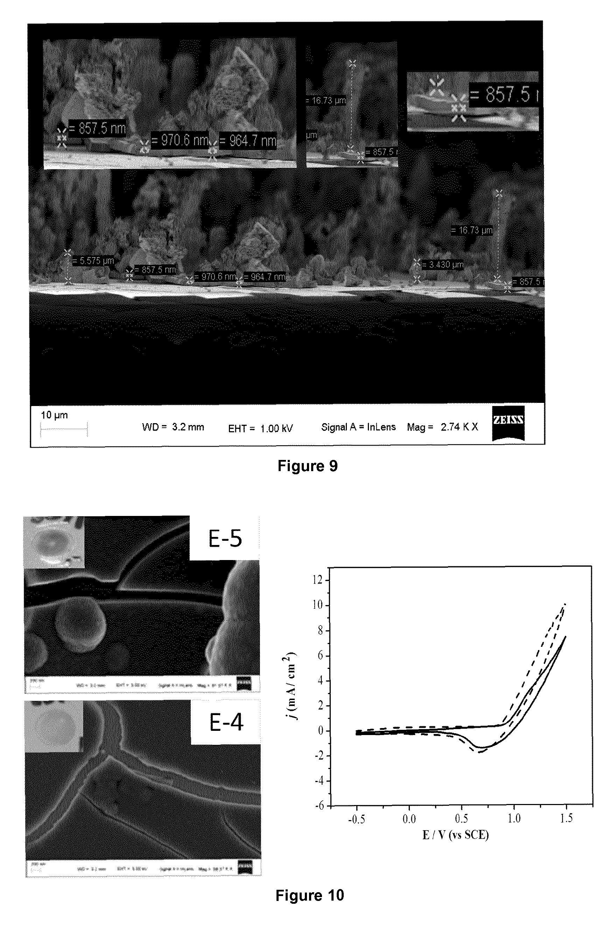

FIGURE 9. SEM picture of ITO electrode E-3 modified as described in table 1.

FIGURE 10. Right: SEM images of electrode E-4 and E-5. Left: CVs ($v$ = 0.1 V/s) recorded in a 0.1 M phosphate buffered solution (pH 7; 5 mL) for electrodes b (dashed line) and c (solid line).

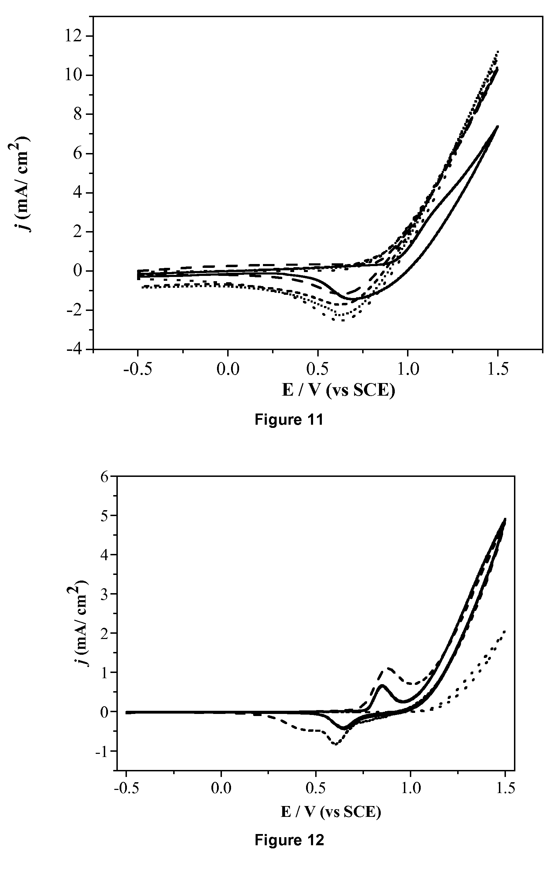

FIGURE 11. Cyclic voltammograms ($v$ = 0.1 V/s) recorded in a 0.1 M phosphate buffered solution for ITO electrodes electromodified from C/Co-NPs films (5 mg/cm$^2$) using different deposition time : (dashed line) 120 s, (dotted line) 600 s, (short dashed line) 1800 s, (short dotted line) 3600 s. Solid line: ITO electrode prepared from 1 hr electrodeposition at 1 V (vs. SCE) in a 0.1 M 5 mL phosphate buffer solution (pH 7) containing 0.5 mM $Co(NO_3)_2$.

FIGURE 12. Cyclic voltammograms (v = 0.1 V/s) recorded in a 0.1M borate buffer solution (pH = 9.2) for three different electrodes. ITO electrodes were first modified by anodic electrodeposition at 1V vs SCE during 600 s in the presence of 0 mg/cm$^2$ (dotted line), 0.05 mg/cm$^2$ (solid line) and 0.5 mg/cm$^2$ (dashed line) C/Ni-NPs under magnetic field and then rinsed before the cyclic voltammogram was recorded.

**EXAMPLES**

The present invention will be further illustrated by the examples below, which are not to be construed as limitative of the scope of the present invention.

**Experimental**

*Materials*

The carbon-coated cobalt carbide nanoparticles, carbon-coated amine cobalt carbide nanoparticles, carbon-coated carboxy cobalt carbide nanoparticles, carbon-coated complexon cobalt carbide nanoparticles and silica-carbon coated cobalt carbide nanoparticles, nickel cobalt oxide, cobalt(II,III) oxide were purchased from Sigma. The carbon-coated azide carbide nanoparticles was purchased from Turbobeads Llc., Zurich, Switzerland. The carbon-coated nickel carbide nanoparticles (20 nm), carbon-coated iron carbide nanoparticles (25 nm), nickel nanoparticles (800 nm), iron nanoparticles (800 nm), tungsten carbide cobalt carbide nanoparticles (40-80 nm) were purchased from US research nanomaterials, Inc.

0.2 M phosphate buffer (PB, pH=7.0), 0.2 M borate buffer (Bi, pH=9.2) were prepared as a detection buffer solution. Other reagents were of analytical reagent grade. All of the solutions and suspensions were prepared with distilled water from micropure system (TKA, Germany).

Commercial magnetic carbon-coated cobalt carbide nanoparticles (C/Co-NPs), with a avergae size inferior to 50 nm (Figure 2), are air- and thermally-stable cobalt carbide nanoparticles with a carbon shell that consists of approximately three graphitic layers for a total carbon content inferior to 8 %.

Carbon-coated cobalt carbide nanoparticles (C/Co-NPs) are air- and thermally-stable magnetic carbon-coated cobalt nanoparticles (nanomagnets), and the carbon shell consists of approximately three graphitic layers for a total carbon content inferior to 8 %. They are intrinsically conductive due to the outer graphene layer and the metallic nature of the core. Besides, these particles can be easily manipulated by means of a magnet and can be chemically functionalized on their outer surface by different functional groups, making them a valuable tool in the field of magnetic separation. The most common approach for fabricating monodisperse Co nanoparticles is *via* thermal decomposition of the corresponding organometallic precursors, particularly the carbonyls.

Properties of C/Co-NPs are presented as below:

**Table 1:** Properties of C/Co-NPs (from sigma®)

| Name | Carbon-coated cobalt carbide nanoparticles (C/Co-NPs) |
|---|---|
| Assay | > 99% |
| Form | Nanopowder |
| Composition | Carbon content, < 8 wt%> |
| Magnetization | > 150 emu/g, Mass saturation |
| Resistivity | 6.24 pQ-cm, 20 °C |
| Particle size | < 50 nm (TEM) |
| Surface area | BET surf. area > 15 m2/g |
| bp | 2900 °C (lit.) |
| Density | 8.9 g/mL at 25 °C (lit.) |

*Electrochemical Methods*

The voltammograms were recorded at a CHI900 electrochemical work station (CHI, USA) with a three-electrode system consisting of a working electrode (tin-doped indium oxide electrode, ITO, or indium tin oxide coated PET, PET ITO; and the specific area: 0.196 $cm^2$) and SCE reference (soaked in saturated KCl), and a platinum wire or platinum mesh counter electrode.

*Film Preparation*

The nanoparticles were prepared into suspension by two different procedures: long-time sonication and short-time sonication. For the long-time sonicated nanoparticles, a certain amount of nanoparticles were added with water, which were sonicated for 1 hour to prepare a well-dispersed suspension; for the short-time sonicated nanoparticles, the nanoparticles in water were added additional 0.1 % tween 20, which was needed to sonicate only for 2 mins. After preparing the well-dispersed suspension, the nanoparticles could suspend in the water for a while without aggregation.

The working cells in electrochemical experiments are also divided into small volume and large volume.

Catalytic films were deposited through cyclic voltammetry for 2 segments or chronoamperometry with different deposition time.

*Faradaic Efficiency Detection*

Rotating ring disk electrode (RRDE) measurements were conducted by using a pine rotator and a rotating electrode speed controler, and also a RRDE (the specific area of the disk: 0.248 cm$^2$, the specific area of the ring: 0.185 cm$^2$). The collection efficiency (37%) of the RRDE was provided by the manufacturer, which was calculated by the classic text electrochemical methods by Alan bard and Larry Faulkner (John Wiley & Sons, 1980).

The working cell was filled with 20 mL 1 M NaOH and deoxygen for 30 mins, and the whole cell was under 1 atm argon during the experiment. The disk electrode was subjected by 5 mV/s cyclic voltammetry at a rotation speed of 1600 rpm, and then the dissolved $O_2$ generated by the disk electrode was swept to the ring electrode that is held at -0.7 V to reduce the $O_2$ to $H_2O_2$.

*SEM and EDX*

The type of scanning electron microscope (SEM) is ZEISS, suprat™ 40, and the type of Energy-dispersive X-ray spectroscopy (EDX) is JSM 6510

**Example 1: electrode obtained using Co/C NPs**

*Process for obtaining an electrode according to the invention*

The C/Co-NPs powder was purchased from Sigma (Ref-697745) as well as cobalt oxide particles ($Co_3O_4$, Ref-637025). The magnetic powder of cobalt carbide was dispersed in water for concentrations in the range of 0.5 to 50 mg/mL in order to form a colloidal suspension. The dispersion in pure water is realized by fast ultrasonication (<5 mn) in the presence of a detergent (Tween 20, 0.1 wt %). ITO-Glass and ITO-PET conducting substrates were both purchased from Sigma and thoroughly rinsed with water prior to use.

After the film has been formed, a saturated calomel reference electrode (SCE) as well as a counter electrode (platinum wire or mesh) are dipped in the electrolytic solution (0.1 M phosphate, pH= 7) and all were connected to a potentiostat in order to polarize the ITO electrode at a controlled potential (we used in this study two types of electrochemical cell: a small volume one of 40 μL and a large volume one of 15 mL. The second one was later preferred because it surely avoids any concentration of reaction products during long term polarization and allows the use of a magnetic stirrer when checking the film activity after its formation).

These particles can be easily manipulated by means of a magnet and can be chemically functionalized on their outer surface by different functional groups, making them a valuable tool in the field of magnetic separation. [3]

The magnetic powder was first dispersed in pure water (from 0.5 to 50 mg/mL) in the presence of a detergent, Tween 20, leading to a homogenous suspension after 5 minutes of ultrasonication. The colloidal suspension was then half-to-half mixed with a phosphate buffer solution (0.2 M, pH = 7) and 40 μL of the solution was deposited on the surface of a flat ITO electrode (disk area of ~0.2 cm$^2$). ITO was chosen for its transparency because this facilitates the naked-eye observation of the deposition but it can alternatively be carbon electrode or any other conducting or semi-conducting material. Using a cylindrical magnet, whose diameter is similar to that of the ITO disk electrode and that is positioned underneath the electrode, the magnetic particles are rapidly collected at the electrode/solution interface. Depending on the amount of particles initially present inside the droplet (from 0.01 to 1 mg), the deposit of nanoporous films of metallic particles at the ITO electrode surface was obtained with a thickness ranging from a monolayer of particles to several microns (from 0.05 to 5 mg/cm$^2$).

*Cyclic voltametry*

First, 0.05 mg/cm$^2$ of active material was deposited, which corresponds approximately to a monolayer of particles and tested the activity by cyclic voltammetry (scan range between 0.5 and 1.5 V vs. SCE at 0.1 V/s) in a phosphate buffered solution (0.1 M, pH = 7). Figure 3 shows the CVs recorded in the presence (dashed line) or in the absence (short dashed) of the particles. The comparison of the two curves shows clearly the existence of an irreversible oxidation wave characteristic of catalytic water oxidation. The onset of the catalytic current increase was observed at -1.0 V before the current rapidly rose to 10 mA/cm$^2$ at a potential of 1.38 V vs. SCE ($\eta$ = 0.80 V vs $E_{O2/H2O}$ at pH 7).

To further establish the origin of this catalytic activity, the magnet was removed and the electrode was rinsed before a new CV was recorded. A strong anodic current was still observed in that case (Figure 3, solid line). Besides, when a particulate film was magnetically deposited but not subjected to anodic polarization, the CV trace after washing was similar to that of a naked ITO electrode (data not shown). The conclusion is that a catalytically active film was deposited through anodic polarization during the first CV scan.

The magnetic particles act therefore as a precursor for the electrodeposition of a catalytic film.

The CV of the particulate film also showed at the foot of the catalytic wave a low but significant anodic current starting from -0.4 V (insert Figure 3, dashed line), corresponding thus to a large and ill-defined oxidation pre-wave that was no more present when the particles were washed out after the scan (insert Figure 3, solid line). This pre-wave was assigned to the oxidation of metallic cobalt (Co$^0$) to Co$^{II}$ and probably Co$^{III}$ at higher potentials. This suggests that, during this polarization, the C/Co-NPs particles in electrical contact with the ITO were progressively oxidized, resulting in the release of high local concentrations of ionic metallic species such as Co$^{II}$ and/or Co$^{III}$ by anodic corrosion/dissolution within a thin diffusion layer. In the presence of phosphate anions and at sufficiently oxidative potentials, the conditions are locally gathered to form an amorphous cobalt hydroxide film similar to that reported by Nocera. [2] This was confirmed by the presence of a reversible catalytic prewave around 0.9-1 V vs. SCE and by the dependence of this prewave with the presence/nature of the anions (see Fig 4).[4] Indeed, the film forms preferentially in aqueous buffered solution containing phosphates that induce the precipitation of metallic ions [Co$^{III}$] and stabilize the amorphous film through a self-healing process.[5] In addition, it is important to note that when replacing the C/Co-NPs by cobalt oxide nanoparticles (Co$_3$O$_4$), that is, particles for which the totality of the cobalt was already in a stable form with high oxidation state, no phenomenon of corrosion or film deposition was observed.

*Oxidation of water*

With the aim to assess the production of O$_2$ but also to evaluate the faradic efficiency of the catalytic oxidation reaction, a rotating ring-disk (RRDE) experiment was carried out. The central carbon disk was first modified by a film electrodeposited from the anodic corrosion of C/Co-NPs during 10 min at 1 V vs. SCE in a phosphate buffer 0.1M. The current at the platinum ring disk polarized at a sufficiently cathodic potential of -0.7 V (vs SCE) during a CV scan at the working electrode disk was then recorded (Figure 5). While the anodic current increases, current was increasing at the ring: this is a direct evidence that dioxygen is indeed produced at the catalytic film. When comparing current densities at both electrodes and taking into account the collection efficiency, we determined a faradic yield close to 1 (0.91). We can also note that in the strongly alkaline conditions used for this experiment (1 M NaOH, pH=14) and for this particular film (10 min) at 1 V vs. SCE), the overpotential for water oxidation was only 510 mV for a current density of 10 mA/cm$^2$.

Then, we compared the catalytic film deposition from nanoparticles to that from a simple cobalt salt buffered solution as proposed by Nocera [2]. The current intensity recorded at an ITO electrode previously modified with a film deposited from a 0.5 mM Co(NO$_3$)$_2$ solution by cyclic voltammetry (a unique scan range between 0.5 et 1.5 V vs. SCE at 0.1 V/s) in a phosphate buffered solution (0.1 M, pH = 7) was lower under these conditions than in the case of a film deposited from C/Co-NPs (Figure 3 dotted and solid line, respectively). The deposition from the nanoparticles film seems therefore to be more efficient for such a deposition procedure.

Presumably, the reason for which the activity was better in the case of the present deposition procedure compared with the deposition from Co$^{II}$ cations in solution is that the concentration of these ions locally released (i.e. at the vicinity of the electrode surface) by corrosion of the particles is far greater than that reached by simple solubilization of a cobalt nitrate salt in a 0.1 M phosphate buffer, as at room temperature, the solubility of cobalt nitrate in this buffer is below 1 mM. The difference of activity lies therefore probably rather in a difference of quantity of catalyst deposited than in the nature of the catalyst itself.

**Example 2: Electrode of the invention with different thicknesses of deposited films of catalytic materials obtained using Co/C NPs**

We then tested the ability to deposit thicker catalytic films by collecting at the electrode surface increasing quantities of C/Co-NPs.[6] As seen in Table 1, potentiostatic experiments at a sufficiently anodic potential (1V vs. SCE) were carried out for amounts of particles ranging from 0.05 to 5 mg/cm$^2$ and for polarization periods ranging from a few seconds to an hour. After the electrodeposition, the electrodes were carefully rinsed with water, leading to the removal of particles that have not reacted. This resulted in deposits of different aspects, thicknesses and morphologies.

**Table 2.** Electrode nomenclature and preparation (all electrodes were modified by polarization at 1V vs SCE)

| Electrode | Cobalt form | Deposition time |
|---|---|---|
| E-1 | 0.05 mg/cm$^2$ C/Co-NPs | 3600 s |
| E-2 | 0.5 mg/cm$^2$ C/Co-NPs | 3600 s |
| E-3 | 5 mg/cm$^2$ C/Co-NPs | 3600 s |
| E-4 | 0.5 mM Co(NO$_3$)$_2$ | 3600 s |
| E-5 | 5 mg/cm$^2$ C/Co-NPs | 10 s |
| E-6 | 5 mg/cm$^2$ C/Co-NPs | 120 s |
| E-7 | 5 mg/cm$^2$ C/Co-NPs | 600 s |
| E-8 | 5 mg/cm$^2$ C/Co-NPs | 1800 s |

On Figure 6 (E-1, E-2 and E-3), the aspect difference for films deposited from 0.05 to 5 mg/cm$^2$ for a given polarization time (1 hr) can be evaluated. The film formation was associated with the apparition of a brown coloration, from quasi transparent to opaque with increasing initial amount of deposited particles. This suggests that the particles are entrapped in the hydroxide amorphous film which deposits over them. Indeed, the particles being intrinsically conducting, the whole film is therefore submitted to anodic corrosion during the electrodeposition process. The higher the initial quantity of particles, the thicker the electrodeposit forming and adhering to the surface after rinsing. This translates into a darker coloration and greater opacity of the film. It is noteworthy that a much weaker coloured film was observed in the case of procedure using the solubilised Co$^{II}$ with the same duration for electrodeposition (E-4) which suggests a thinner deposit in that case. This correlates well with a lower catalytic activity of the film (Figure 7). However, difference in activity between the various amounts of particles deposited (0.05, 0.5 and 5 mg/cm$^2$) was not significant, suggesting that only a fraction of the deposited film is active.

The SEM images showed the characteristic cracks observed after the drying of an amorphous and homogenous film of cobalt oxide or hydroxide. We also observed the presence of residual cobalt particles aggregates that have not been washed out, probably because of their strong adhesion to the film. In the case of the browner and opaque deposits (E-2 and E-3), the film was composed of an underlying homogeneous layer covering the ITO electrode (a) and a thick upper layer of particles entrapped in an amorphous matrix (b). The first underlying layer is probably the catalytic film directly generated from Co$^{II}$ released close to the electrode surface while the second corresponds to an amorphous material in the porosity of the magnetically deposited particles network. EDX analysis showed that both layers are composed mainly of Co, O and P, with a relative higher content in Co in the upper layer, which would confirm that non-completely corroded cobalt particles were entrapped in this layer. For the highest initial amount of particles (5mg/cm$^2$, E-3), this superior layer had a thickness of around 15$\mu$m while that for the inferior homogenous film is slightly below 1$\mu$m (Figure 8 and 9).

Another key advantage of this method is the possibility to generate a relatively thick catalytically active film in a very short time. According to Nocera's model [7], the local release of high amount of Co$^{II}$ would be favorable to enhanced film formation kinetics. This is illustrated in Figure 10 that compares electrodes E-4 and E-5. It is obvious that the film formed in only 10 s of polarization time is thicker than that deposited from the cobalt salt buffered solution. The gain in deposition time is therefore of 360 fold for a film that has a better activity and a greater thickness. As seen in Figure 10, the overpotential was 200 mV lower for a current density of 5 mA/cm$^2$. In addition, the gain in activity was poor for a deposition longer than 2 minutes (Fig 11, electrodes E-5 to E-8), meaning that short electrodepositions are sufficient to reach optimal activity under the present conditions.

**Example 3: Electrode of the invention coated with films of catalytic materials obtained from different NPs**

The principle of film formation can be extended to several metallic particles containing a transition metal at a low oxidation state, with no restriction upon their magnetic properties. A similar strategy was successfully applied to particles of a different nature. For instance, the use of carbon coated nickel nanoparticles (C/Ni-NPs) led to the formation of film upon anodic corrosion/dissolution in a buffered media (borate buffered solution, pH=9.2) with good catalytic activity towards water oxidation (Figure 12).

**Conclusions**

The method herein described is significant because the electrodeposition of the amorphous film of catalytic material was performed by corrosion of a dispersed solid phase, i.e. the metallic cobalt nanoparticles that are in this case collected at the electrode surface by a simple magnet. Compared to a film formed from a solution of a metallic salt, the main advantage is to supply the metallic ion in a solid and metallic form, with the fast release of a high local concentration of metallic ions. In addition, when the particles exhibit magnetic properties, this solid phase can be easily manipulated under the action of a magnetic field to form the precursor film, a process that is fast and very easily performed. This can be a crucial advantage in an industrial process. Besides, it is much easier to recover if necessary the excess non-electrodeposited particles (for instance cobalt carbide nanoparticles) for re-using and to minimize environmental metallic pollution.

The main advantage of the method of the invention is to produce a relatively thick film in a very short time with a high activity. It is believed that this is due to the capacity to release a large amount of metallic cations right at the spot of the film formation. Besides, the use of magnetic material to produce these films offers many advantages in terms of manipulation and particles reuse that can be interesting in the context of an industrial process.

**REFERENCES**

[1] T. R. Cook, D. K. Dogutan, S. Y. Reece, Y. Surendranath, T. S. Teets and D. G. Nocera, Chemical Reviews, 2010, 110, 6474-6502

[2] M. W. Kanan and D. G. Nocera, Science, 2008, 321, 1072-1075

[3] R. N. Grass, E. K. Athanassiou and W. J. Stark, Angewandte Chemie International Edition, 2007, 46, 4909-4912

[4] Y. Surendranath, M. Dincă and D. G. Nocera, *Journal of the American Chemical Society,* 2009, **131,** 2615-2620

[5] D. A. Lutterman, Y. Surendranath and D. G. Nocera, Journal of the American Chemical Society, 2009, 131, 3838-3839

[6] D. K. Bediako, C. Costentin, E. C. Jones, D. G. Nocera and J.-M. Savéant, Journal of the American Chemical Society, 2013, 135, 10492-10502

[7] Y. Surendranath, D. A. Lutterman, Y. Liu and D. G. Nocera, Journal of the American Chemical Society, 2012, 134, 6326-6336

**Claims**

1. A process for preparing a film-coated electrode comprising:

   (a) collecting a suspension of nanoparticles of a metallic species in an oxidation state of zero on a core material,
   (b) applying a voltage to oxidize said metallic species in a solution comprising an anionic species,

   the film of the said film-coated electrode comprising a catalytically active species, and is preferably amorphous and/or porous.

2. The process according to claim 1, comprising the following steps prior to collecting the suspended nanoparticles:

   (a1) suspending nanoparticles of a metallic species in an oxidation state of zero in a solvent,
   (a2) immersing a core material in the suspension obtained in step (a1),
   (a3) adding anionic species to the suspension obtained in step (a2).

3. The process according to claim 1 or 2, wherein the metallic species in an oxidation state of zero is chosen from among cobalt, nickel, iron, manganese and copper, or mixtures thereof, advantageously cobalt.

4. The process according to claim 1 to 3, wherein the average size of the nanoparticles of the metallic species is comprised between 2 and 2000 nm.

5. The process according to claim 1 to 4, wherein the metallic species is a metal carbide, advantageously cobalt carbide.

6. The process according to any of claims 2 to 5, wherein the solvent for suspending the nanoparticles is chosen from among water, alcohols, such as methanol and ethanol, and mixtures thereof.

7. The process according to any of claims 1 to 6, wherein the suspended nanoparticles are collected on the core material by magnetization, solvent evaporation or sedimentation.

8. The process according to any of claims 1 to 7, wherein the amount of collected nanoparticles relative to the surface of the core material is comprised between 0.01 mg.cm$^{-2}$ and 10 mg.cm$^{-2}$, advantageously between 0.05 mg.cm$^{-2}$ and 5 mg.cm$^{-2}$.

9. The process according to any of claims 1 to 8, wherein the core material is conductive or semi-conductive, advantageously chosen from among indium tin oxide (ITO); fluorine tin oxide (FTO); antimony-doped tin oxide (ATO); aluminum-doped zinc oxide (AZO); glassy carbon; graphite; carbon composite; carbon mesh; metals, such as gold, copper, silver, platinum, ruthenium, rhodium, osmium, iridium, nickel, cadmium, tin, lithium, chromium, calcium, titanium, aluminum, cobalt, zinc, vanadium, nickel, palladium, copper, and combinations thereof; metal alloys; lithium-containing compounds; metal oxides such as platinum oxide, nickel oxide, zinc oxide, tin oxide, vanadium oxide, zinc-tin oxide, indium oxide, indium-zinc oxide; graphite; organic conductive polymers, such as polyaniline, polythiophene, polypyrrole; laminates and combinations thereof.

10. The process according to any of claims 1 to 9, wherein the anionic species is chosen from among phosphates, borates, carbonates, arsenates, silicates, sulfates, and nitrates, organophosphate, phosphonates, and carboxylates, advantageously phosphate and borate, and is associated with a counter ion advantageously chosen from among K$^+$, Na$^+$, Li$^+$, Mg$^{+2}$, Ca$^{+2}$, Sr$^{+2}$ and ammonium ions.

11. The process according to any of claims 1 to 10, wherein step (b) is conducted at a pH of between 5 and 9, advantageously 6 and 8, preferably 7.

12. The process according to any of claims 2 to 11, further comprising a step of dispersing the suspended nanoparticles of the metallic species after step (a1) and before step (a2), advantageously by sonication or stirring, preferably by sonication.

13. A film-coated electrode obtainable by the process according to any of the preceding claims.

14. An electrolytic cell comprising an electrode according to claim 13.

15. Use of a film coated electrode according to claim 13 or of an electrolytic cell according to claim 14 for producing H$_2$ through water electrolysis.

Figure 1

Figure 2

Figure 3

Figure 4

Figure 5

**Figure 6**

Figure 7

Figure 8

Figure 9

Figure 10

Figure 11

Figure 12

Europäisches
Patentamt

European
Patent Office

Office européen
des brevets

# EUROPEAN SEARCH REPORT

Application Number

EP 14 30 6849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/114496 A1 (DOPP ROBERT B [US] ET AL) 19 May 2011 (2011-05-19) * claims 1-4,8-10,12-15,19,93 * * paragraphs [0007] - [0012], [0015], [0018], [0053], [0057] - [0062], [0081], [0149], [0150] * ----- | 1-15 | INV. C25B11/04 C25B1/04 ADD. C25D11/34 C25D5/00 |
| X | US 2007/037055 A1 (YAMADA YUKA [JP] ET AL) 15 February 2007 (2007-02-15) | 13-15 | |
| Y | * claims 1-9 * * example 1 * * paragraphs [0092], [0095], [0105], [0107], [0127] * ----- | 1-12 | |
| X | US 2010/233577 A1 (CARPENTER R DOUGLAS [US] ET AL) 16 September 2010 (2010-09-16) | 13-15 | |
| Y | * claims 1,4-9,15-17 * * paragraphs [0014] - [0020], [0095], [0101] * ----- | 1-12 | |
| Y | US 2003/038034 A1 (GRIEGO THOMAS P [US] ET AL) 27 February 2003 (2003-02-27) * claims 10,18,20 * * paragraphs [0038], [0055], [0058] * ----- | 1-15 | TECHNICAL FIELDS SEARCHED (IPC) C25B C25D |
| Y,D | GRASS R N ET AL: "Covalently functionalized cobalt nanoparticles as a platform for magnetic separations in organic synthesis", ANGEWANDTE CHEMIE INTERNATIONAL EDITION, WILEY - V C H VERLAG GMBH & CO. KGAA, DE, vol. 46, 22 May 2007 (2007-05-22), pages 4909-4912, XP002492532, ISSN: 1433-7851, DOI: 10.1002/ANIE.200700613 * figure 1 * * page 4909, right-hand column, paragraph 1 * ----- | 1-15 | |

The present search report has been drawn up for all claims

| Place of search | Date of completion of the search | Examiner |
|---|---|---|
| Munich | 27 April 2015 | Perednis, Dainius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

EP 3 023 517 A1

## ANNEX TO THE EUROPEAN SEARCH REPORT
## ON EUROPEAN PATENT APPLICATION NO.

EP 14 30 6849

27-04-2015

| Patent document cited in search report | | Publication date | Patent family member(s) | | Publication date |
|---|---|---|---|---|---|
| US 2011114496 | A1 | 19-05-2011 | US 2011114496 A1 | | 19-05-2011 |
| | | | WO 2010009058 A1 | | 21-01-2010 |
| US 2007037055 | A1 | 15-02-2007 | CN 1957250 A | | 02-05-2007 |
| | | | JP 3940817 B2 | | 04-07-2007 |
| | | | US 2007037055 A1 | | 15-02-2007 |
| | | | WO 2006129413 A1 | | 07-12-2006 |
| US 2010233577 | A1 | 16-09-2010 | US 2010233577 A1 | | 16-09-2010 |
| | | | US 2011155571 A1 | | 30-06-2011 |
| | | | US 2012094216 A1 | | 19-04-2012 |
| US 2003038034 | A1 | 27-02-2003 | US 2003038034 A1 | | 27-02-2003 |
| | | | US 2005202269 A1 | | 15-09-2005 |
| | | | US 2007238020 A1 | | 11-10-2007 |
| | | | WO 03018875 A1 | | 06-03-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. R. COOK ; D. K. DOGUTAN ; S. Y. REECE ; Y. SURENDRANATH ; T. S. TEETS ; D. G. NOCERA.** *Chemical Reviews,* 2010, vol. 110, 6474-6502
- **M. W. KANAN ; D. G. NOCERA.** *Science,* 2008, vol. 321, 1072-1075
- **R. N. GRASS ; E. K. ATHANASSIOU ; W. J. STARK.** *Angewandte Chemie International Edition,* 2007, vol. 46, 4909-4912

- **D. A. LUTTERMAN ; Y. SURENDRANATH ; D. G. NOCERA.** *Journal of the American Chemical Society,* 2009, vol. 131, 3838-3839
- **D. K. BEDIAKO ; C. COSTENTIN ; E. C. JONES ; D. G. NOCERA ; J.-M. SAVÉANT.** *Journal of the American Chemical Society,* 2013, vol. 135, 10492-10502
- **Y. SURENDRANATH ; D. A. LUTTERMAN ; Y. LIU ; D. G. NOCERA.** *Journal of the American Chemical Society,* 2012, vol. 134, 6326-6336